# EUROPÄISCHE PATENTSCHRIFT

(11) **EP 2 864 455 B1**
(45) Veröffentlichungstag und Bekanntmachung des Hinweises auf die Patenterteilung: **26.12.2018**
(21) Anmeldenummer: 13736502.9
(22) Anmeldetag: 20.06.2013
(51) Int. Cl.: C10L 9/08, C10B 47/02

(54) **ANLAGE UND VERFAHREN ZUR THERMISCHEN BEHANDLUNG EINES STOFFSTROMS**
SYSTEM AND METHOD FOR THE THERMAL TREATMENT OF A MATERIAL FLOW
DISPOSITIF ET PROCÉDÉ DE TRAITEMENT THERMIQUE D'UN FLUX DE MATIÈRE

(30) Priorität: 22.06.2012 DE 102012105431
(43) Veröffentlichungstag der Anmeldung: 29.04.2015
(73) Patentinhaber: thyssenkrupp Industrial Solutions AG, 45143 Essen (DE)
(72) Erfinder: SCHOLZ, Guido, 48291 Telgte (DE); DIETRICH, Meike, 48167 Münster (DE); LAMPE, Karl, 59320 Ennigerloh (DE); ERPELDING, Richard, 59494 Soest (DE); DENKER, Jürgen, 59269 Beckum (DE); FLEUTER, Peter, 59227 Ahlen (DE); KARAKUS, Yilmaz, 59229 Ahlen (DE)
(74) Vertreter: thyssenkrupp Intellectual Property GmbH
(86) Internationale Anmeldenummer: PCT/EP2013/062913
(87) Internationale Veröffentlichungsnummer: WO 2013/190053

(56) Entgegenhaltungen:
- WO-A1-2012/007574
- WO-A2-2013/003615
- FR-A- 1 257 293
- US-A- 864 186
- US-A1- 2010 242 351

## Beschreibung

Die Erfindung betrifft eine Anlage sowie ein Verfahren zur thermischen Behandlung eines Stoffstroms, vorzugsweise eines Kohlenstoff enthaltenden Stoffstroms.

Aus der WO 2012/007574 A1 ist eine Vorrichtung zur Trocknung und Torrefizierung von kohlenstoffhaltigen Stoffströmen bekannt. Mit dieser Vorrichtung ist es möglich große Mengen von Biomasse im industriellen Maßstab zu torrefizieren.

Eine bisher noch nicht zufriedenstellend gelöste Aufgabe stellt die Kühlung des Torrefikats dar. In der GB 432 198 A wird ein Etagenofen zur thermischen Behandlung von Schlämmen oder anderen Abfallmaterialien beschrieben, bei dem in der untersten Etagen ein Kühlgas zugeführt wird, dass nachfolgend die darüber angeordneten Etagen im Gegenstrom zum Material durchströmt und am oberen Ende des Etagenofens abgezogen und einem Kondensator zugeführt wird.

Die FR 1 257 293 A offenbart die Behandlung eines kohlenstoffhaltigen Stoffstroms in wenigstens einem oberen und einem unteren Prozessraum, wobei in einem oberen Prozessraum eine Wärmebehandlung mit erhöhten Temperaturen und in einem unteren Prozessraum eine Kühlung mittels Kühlgas stattfindet.

Aus der WO 2012/007574 A1 und der US 2010/0242351 A1 sind Vorrichtungen zur Trocknung und Torrefizierung eines kohlenstoffhaltigen Stoffstroms in einem Etagenofen bekannt, wobei in einem oberen Bereich des Etagenofens eine Trocknungszone und in einem unteren Bereich eine Torrefizierungszone vorgesehen sind.

Die US 2012/0073159 A1 beschreibt einen Etagenofen mit mehreren, übereinander angeordneten und um eine Zentralwelle rotierenden Herdböden. Das zu torrefizierende Material wird zunächst in einem oberen Bereich des Etagenofens mittels Heißgas getrocknet, bevor es in einem mittleren Bereich torrefiziert wird, wobei das Material jeweils über Abstreifer auf den nächst niedrigeren Herdboden gelangt. Im unteren Bereich des Etagenofens ist eine Zone zur Kühlung des torrefizierten Materials vorgesehen, der eine Kühlflüssigkeit, insbesondere Wasser zugeführt wird. Die Kühlflüssigkeit wird entweder separat oder zusammen mit dem abgekühlten, torrefizierten Material ausgeschleust. Durch die Konstruktion des Etagenofens vermischen sich die bei der Kühlung, Torrefizierung und Trocknung entstehenden Abgases, die im oberen Bereich des Etagenofens abgezogen werden.

Aufgrund der Selbstentzündlichkeit des Stoffstroms muss die Kühlung mit besonderer Sorgfalt durchgeführt werden. Auch die Entstehung von Glimmnestern muss sicher ausgeschlossen werden.

Der Erfindung liegt daher die Aufgabe zugrunde, eine möglichst schnelle und effektive Kühlung in der Kühlzone eines Mehretagenofens zu gewährleisten.

Erfindungsgemäß wird diese Aufgabe durch die Merkmale der Ansprüche 1 und 8 gelöst.

Die erfindungsgemäße Anlage zur thermischen Behandlung eines Stoffstroms, vorzugsweise eines Kohlenstoff enthaltenden Stoffstroms umfasst einen Mehretagenofen mit wenigstens einem oberen und einem unteren Prozessraum, die gastechnisch voneinander getrennt sind und jeweils wenigstens zwei übereinander angeordnete Etagen umfassen, wobei der wenigstens eine obere Prozessraum zur Wärmebehandlung des Stoffstroms bei erhöhten Temperaturen als Torrefizierungszone und der untere Prozessraum als Kühlzone ausgebildet ist, und wobei die Kühlzone Mittel zur Einspeisung eines flüssigen Kühlmittels, beispielsweise Mittel zur Eindüsung von Wasser, zur Kühlung und Schaffung einer inerten Atmosphäre aufweist. Weiterhin ist wenigstens eine Zentralwelle vorgesehen ist, die in jeder Etage mit Krählarmen zum Transport des Stoffstroms bestückt ist, und die Mittel zur Einspeisung des flüssigen Kühlmittels an der Zentralwelle und/oder an den Krählarmen angeordnet sind.

Die Anordnung an den Krählarmen ermöglicht eine sehr gleichmäßige Verteilung des Kühlmittels, z.B. Wasser, über die gesamte Fläche eines Etagenbodens.

Unter einer inerten Atmosphäre im Sinne der vorliegenden Erfindung wird eine Atmosphäre mit einem Sauerstoffgehalt von weniger als 8%, vorzugsweise weniger als 6% verstanden.

Beim erfindungsgemäßen Verfahren wird ein Stoffstroms, vorzugsweise ein Kohlenstoff enthaltender Stoffstrom in wenigstens einem oberen und einem unteren Prozessraum, die gastechnisch voneinander getrennt sind und jeweils wenigstens zwei übereinander angeordnete Etagen umfassen, thermisch behandelt. Bei der thermischen Behandlung wird der Stoffstrom in dem wenigstens einem oberen Prozessraum einer Wärmebehandlung unter erhöhten Temperaturen, insbesondere in Form einer Torrefizierung, und im unteren Prozessraum einer Kühlung unterzogen, wobei die Kühlung des Stoffstroms durch Einspeisung eines flüssigen Kühlmittels, insbesondere durch Eindüsung von Wasser, unter Schaffung einer inerten Atmosphäre erfolgt.

Durch die inerte Atmosphäre kann eine Selbstentzündung des wärmebehandelten Materials zuverlässig ausgeschlossen werden. Weiterhin wird durch das Verdampfen des in der Kühlzone auf den Stoffstrom aufgebrachten Kühlmittels, z.B. Wasser oder eine Wasser-Alkohol-Mischung, eine äußerst effektive Kühlwirkung erreicht werden. Hervorgerufen durch diese Maßnahmen kann die Entstehung von Glimmnestern sicher ausgeschlossen werden. Gerade dann, wenn es sich bei dem zu kühlenden Stoffstrom um ein Torrefikat handelt, können die Umwandlungsprozesse des Torrefikats in der Kühlzone gezielt und schnell gestoppt werden, wodurch eine gute Produktqualität erreicht wird. Eine effiziente Kühlung wird vor allem auch dadurch erreicht, dass wenigstens zwei übereinander angeordnete Etagen in der Kühlzone vorgesehen sind, sodass das Material alleine durch den Transport ständig in Bewegung ist und mit neuer Oberfläche dem Kühlmittel ausgesetzt wird.

Weitere Ausgestaltungen der Erfindung sind Gegenstand der Unteransprüche.

Zur Erhöhung der Kühlwirkung weist die Kühlzone neben den Mitteln zur Einspeisung von Kühlmittel, z.B. Eindüsung von Wasser außerdem Mittel zum Zu- und Abführen eines Kühlgases auf. Des Weiteren kann jede Etage einen Etagenboden aufweisen, der mittels einer Kühleinrichtung gekühlt wird.

Der Stoffstrom wird in der Kühlzone vorzugsweise nur soweit abgekühlt, dass eine Selbstentzündung oder die Entstehung von Glimmnestern unter Umgehungsluft ausgeschlossen werden kann. Danach bietet sich eine weitere Kühlung in einer separaten Kühleinrichtung an, die beispielsweise mit Umgebungsluft oder einem Gas mit einem Sauerstoffgehalt von weniger als 8%, vorzugsweise weniger als 6% betrieben wird. Eine solche Kühleinrichtung ist gegenüber einer Kühlzone unter inerten Bedingungen sowohl in den Betriebs- als auch in den Investitionskosten wesentlich günstiger, sodass die Aufteilung des Kühlvorgangs (Kühlzone im Mehretagenofen + separate Kühleinrichtung) vorteilhaft ist.

Gemäß einem bevorzugten Ausführungsbeispiel ist der obere Prozessraum als Torrefizierungszone ausgebildet, dem weiterhin eine Trocknungszone vorgeschaltet sein kann.

Bei Verwendung von Wasser als Kühlmittel wird die in der Kühlzone verwendete Wassermenge zur Kühlung des Stoffstroms zweckmäßigerweise so bemessen, dass der Wassergehalt des Stoffstroms weniger als 5%, vorzugsweise weniger als 3% bezogen auf das Gesamtgewicht des in der Kühlzone abgekühlten Stoffstroms beträgt. Weiterhin wird angestrebt, dass die Temperatur des Stoffstroms in der Kühlzone um mehr als 30% reduziert wird, insbesondere soll die Temperatur in der Kühlzone auf unter 85°C reduziert werden.

Weiterhin ist es von Vorteil, wenn die zur Kühlung verwendete flüssige Kühlmittelmenge so bemessen wird, dass die zugeführte Kühlmittelmenge zu wenigstens 90%, vorzugsweise zu wenigstens 95% verdampft. Idealerweise sollte das flüssige Kühlmittel mehr oder weniger vollständig verdampfen, sodass es nicht mehr erforderlich ist, die nicht verdampfte Kühlmenge vom abgekühlten Stoffstrom zu trennen.

Zusätzlich zu den oben beschriebenen Maßnahmen zur Kühlung kann darüber hinaus bereits gekühltes Material und/oder an anderer Stelle dem Stoffstrom entzogene Prozessstäube (beispielsweise bei der Trocknung) in den unteren Prozessraum eingeführt und mit dem zu kühlenden Stoffstrom zur Kühlung desselben vermischt werden. Weiterhin wird man bestrebt sein, die bei der Kühlung gewonnene Wärmeenergie an anderer Stelle im Prozess, insbesondere zur Wärmebehandlung des Stoffstroms in einem oberen Prozessraum zu nutzen.

Weitere Vorteile und Ausgestaltung der Erfindung werden im Folgenden anhand der Beschreibung und der Zeichnung näher erläutert.

In der Zeichnung zeigen
- Fig. 1: eine schematische Darstellung einer Anlage zur thermischen Behandlung eines Stoffstroms und
- Fig. 2: eine teilweise geschnittene Seitenansicht eines Mehretagenofens mit einem oberen und einem unteren Prozessraum sowie
- Fig. 3: eine geschnittene Teilansicht der Kühlzone.

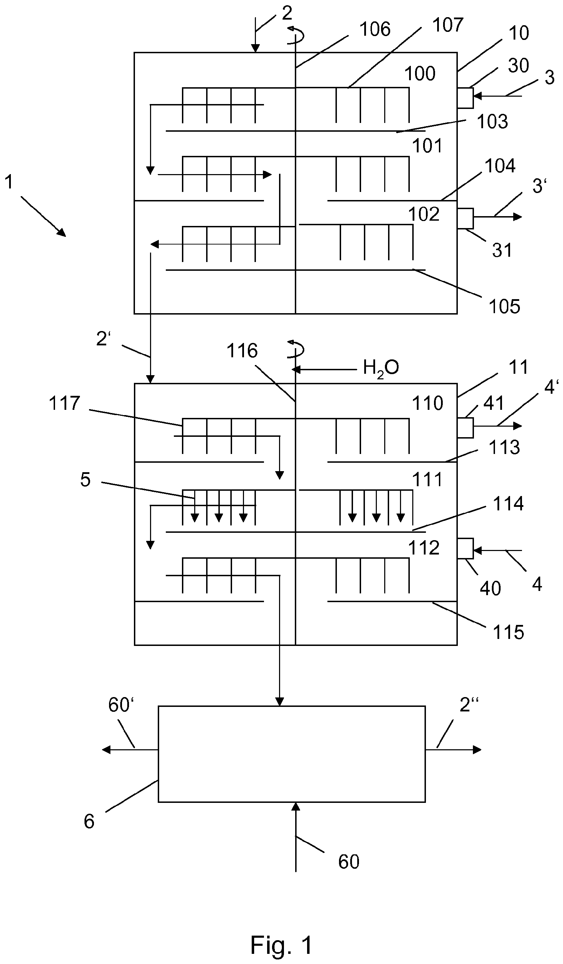

Fig. 1 zeigt eine Anlage zur thermischen Behandlung eines Stoffstroms 2, vorzugsweise eines Kohlenstoff enthaltenden Stoffstroms, umfassend einen Mehretagenofen 1 mit wenigstens einem oberen Prozessraum 10 und einem unteren Prozessraum 11, die gastechnisch voneinander getrennt sind.

Der obere Prozessraum 10 dient beispielsweise zur Torrefizierung eines Stoffstroms 2 und ist mit mehreren übereinander angeordneten Etagen 100-102 ausgestattet, die jeweils einen Etagenboden 103-105 aufweisen. Der Transport des Stoffstroms 2 über die Etagenböden erfolgt mit Hilfe von rotierenden Krählarmen 107, die an einer drehenden Zentralwelle 106 befestigt sind und den Stoffstrom 2 entweder zu einer außen liegenden oder innen liegenden Öffnung transportieren, wo der Stoffstrom mittels Schwerkraft in die nächst tiefer liegende Etage fällt. Während des Transports des Stoffstroms durch die einzelnen Etagen wird der Stoffstrom 2 mit einem Heißgasstrom 3 beaufschlagt, der beispielsweise eine Temperatur von wenigstens 300°C aufweist und über eine Heißgaszuleitung 30 in den oberen Prozessraum 10 eingeleitet wird. Der Stoffstrom 2 kommt dabei in direkten Kontakt mit dem Heißgasstrom 3, sodass die gewünschte thermische Behandlung, beispielsweise eine Torrefizierung des Stoffstroms, stattfindet. Die Ausschleusung des Heißgasstrom 3' erfolgt über eine Heißgasabzugsleitung 31.

Der im oberen Prozessraum 10 thermisch behandelte Stoffstrom 2' wird ausgeschleust und dem unteren Prozessraum 11 aufgegeben. Auch der untere Prozessraum ist in mehrere übereinander angeordnete Etagen 110-112 aufgeteilt, die jeweils einen Etagenboden 113-115 umfassen. Dieser untere Prozessraum 11 ist als Kühlzone ausgebildet, wobei der Transport des zu kühlenden Stoffstroms 2' wiederum über Krählarme 117 erfolgt, die um wenigstens eine Zentralwelle 116 drehen. Die Kühlung des Stoffstroms 2' erfolgt dabei über ein Kühlgas 4, dass über Mittel 40, 41 zu- bzw. abgeführt wird. Weiterhin sind Mittel 5 zur Eindüsung von Wasser vorgesehen, die im dargestellten Ausführungsbeispiel im Bereich der Krählarme 117 vorgesehen sind, wobei Wasser oder ein anderes Kühlmittel beispielsweise über die Zentralwelle 116 und die Krählarme 117 zugeführt wird. Im Rahmen der Erfindung sind aber selbstverständlich auch andere Möglichkeiten der Einspeisung von Kühlmittel denkbar, insbesondere könnte das Wasser oder ein anderes Kühlmittel über die Außenwandung zugeführt werden.

Dem unteren Prozessraum 11 schließt sich eine weitere Kühleinrichtung 6 an, die vorzugsweise mit Umgebungsluft 60 betrieben wird. Der Stoffstrom, bei dem es sich beispielsweise um ein Torrefikat handelt, wird in der Kühleinrichtung 6 weiter abgekühlt und als Endprodukt 2" herausgeführt. Die in der Kühleinrichtung 6 erwärmte Umgebungsluft 60' kann zusammen mit dem aus dem unteren Prozessraum herausgeführten Kühlgas 4', ggf. nach weiterer Erwärmung, als Heißgas oder als Trocknungsgas in einem oberen Prozessraum eingesetzt werden.

Wenngleich in Fig. 1 nur ein oberer Prozessraum dargestellt ist, kann selbstverständlich noch ein weiterer Prozessraum, insbesondere zur Trocknung des Stoffstroms, dem oberen Prozessraum 10 vorgeschaltet sein. Auch in diesem Fall ist eine gastechnische Trennung zwischen dem oberen Prozessraum und dem weiteren Prozessraum zweckmäßig. Findet beispielsweise im vorgeschalteten, weiteren Prozessraum die Trocknung und im nachfolgenden, oberen Prozessraum eine Torrefizierung statt, besteht die Möglichkeit, das bei der Torrefizierung entstehende Schachgas auszuschleusen und einer Nachverbrennung zuzuführen. Da der Volumenstrom nicht durch zusätzliches Trocknerabgas oder gar Kühlerabgas erhöht wird, kann die Nachverbrennungskammer entsprechend klein gehalten werden.

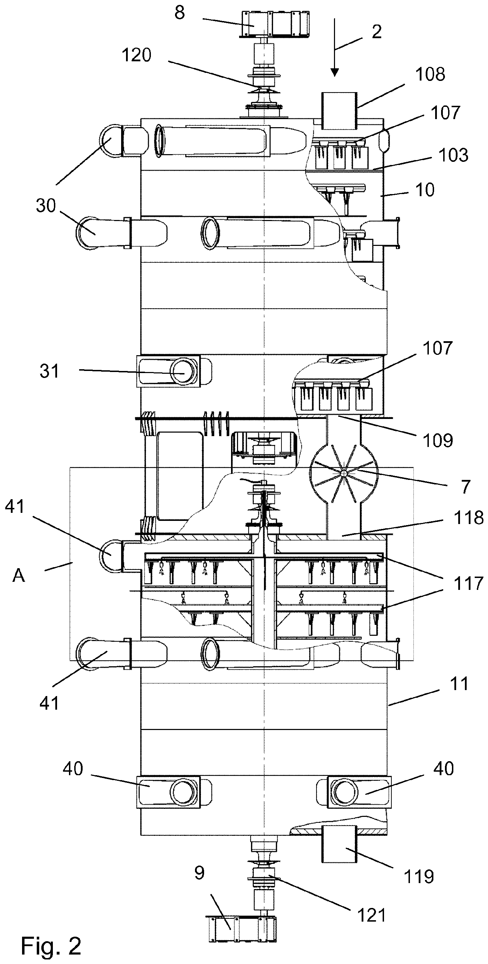

Fig. 2 zeigt ein Ausführungsbeispiel des im Fig. 1 dargestellten Etagenofens 1, der ebenfalls einen oberen Prozessraum 10 und einen als Kühlzone ausgebildeten unteren Prozessraum 11 aufweist. Der zu behandelnde Stoffstrom 2 wird über eine Materialaufgabe 108 in die oberste Etage aufgegeben und über einen Materialauslass 109 aus dem oberen Prozessraum 10 abgeführt. Das Heißgas wird über mehrere gleichmäßig über dem Umfang verteilt angeordnete Heißgaszuleitungen 30 einer oder mehreren oberen Etagen zugeführt und über wenigstens eine Heißgasabzugsleitung 31 in einer der unteren Etagen des oberen Prozessraums 10 abgeführt. Die Krählarme 107 werden über einen der Zentralwelle zugeordneten Antrieb 8 in Drehung versetzt.

Der untere Prozessraum 11 weist ebenfalls eine Materialaufgabe 118 und einen Materialauslass 119 auf. Der Materialauslass 109 des oberen Prozessraums 10 ist über eine Zellenradschleuse 7 mit der Materialaufgabe 118 des unteren Prozessraums 11 verbunden. Auf diese Weise können die Atmosphären der beiden Prozessräume voneinander getrennt werden. Das Kühlgas wird über mehrere im unteren Bereich der Kühlzone angeordnete Zuführmittel 40 zugeführt und im oberen Bereich über mehrere verteilt angeordnete Abführmittel 41 abgezogen. Die Krählarme 117 des unteren Prozessraums 11 werden über einen Antrieb 9 angetrieben. Die Zentralwelle wird durch zwei Lagerstellen 120, 121 gehalten.

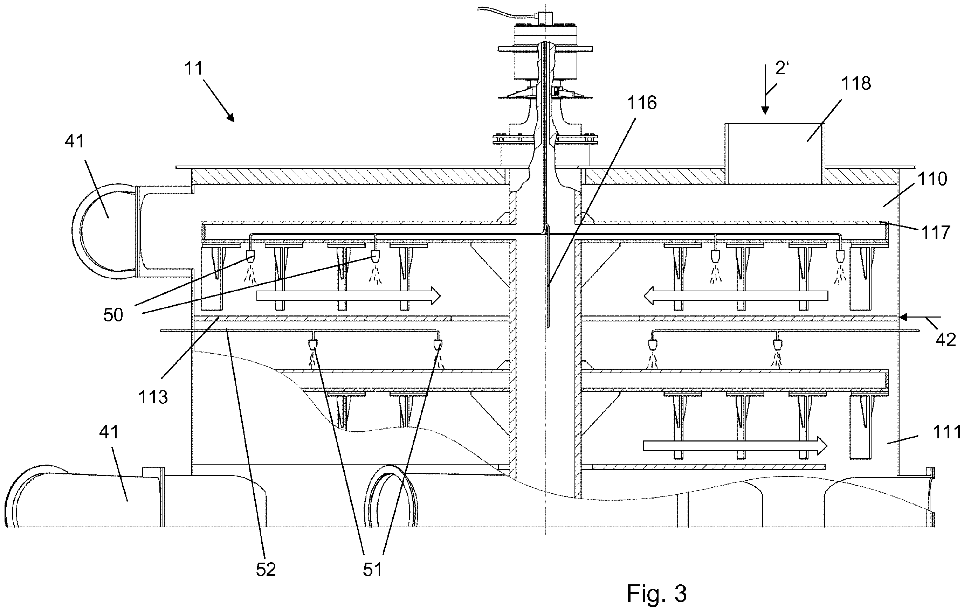

Fig. 3 zeigt eine vergrößerte Darstellung des Details A der Fig. 2.

In Fig. 3 sind zwei Varianten zur Einspeisung von Kühlmitteln, z.B. Eindüsung von Wasser, dargestellt. In der Etage 110 wird Wasser über die Krählarme 117 zugeführt und die Mittel 5 zur Eindüsung des Wassers werden durch Düsen 50 gebildet, die entlang der Krählarme vorgesehen sind, um auf diese Weise möglichst flächendeckend den auf dem Etagenboden 113 befindlichen Stoffstrom mit Wasser zu besprühen und dabei zu kühlen. Die darunterliegende Etage 111 zeigt ein Ausführungsbeispiel, bei der die Mittel 5 zur Eindüsung des Wassers durch über den Außenmantel angeschlossene Leitungen 52 und Düsen 51 gebildet werden. Die Düsen 51 sind dabei oberhalb der Krählarme 117 angeordnet und sind daher zuverlässig vor einen etwaigen Kontakt mit dem Stoffstrom geschützt. Anstelle von Wasser kann auch ein anderes flüssiges Kühlmittel zum Einsatz kommen. Der Transport des Stoffstroms erfolgt über die Krählarme alternierend von außen nach innen, bzw. innen nach außen, wobei das Material ständig gewendet und vermischt wird, sodass eine sehr effiziente Kühlung erfolgen kann. Der Materialtransport über die Etagenböden ermöglicht, bezogen auf das Volumen des Stoffstroms, eine große Fläche für einen konvektiven Wärmeübertrag vom Stoffstrom auf das Kühlgas.

Darüber hinaus können die Etagenböden 113-115 gekühlt ausgebildet werden, indem die Böden mit einem Kühlmittel, z.B. Kühlgas 42 (siehe Fig. 3) beaufschlagt werden und dem Stoffstrom auf diese Weise zusätzlich Wärmeenergie entzogen wird. Als weitere Maßnahme zur Kühlung des Stoffstroms kann dem unteren Prozessraum 11 beispielsweise auch bereits gekühltes Material oder zuvor ausgeschleuste Prozessstäube zur Unterstützung der Kühlung zugeführt werden. Diese Zuführung kann beispielsweise im Bereich der Materialaufgabe 118 erfolgen.

Den größten Kühlbeitrag liefert jedoch die Einspeisung eines flüssigen Kühlmittels z.B. durch Eindüsung von Wasser, wobei durch den Phasenübergang des Kühlmittels von flüssig zu gasförmig dem zu kühlenden Stoffstrom besonders viel Wärmeenergie entzogen werden kann. Wird Wasser als Kühlmittel verwendet, ist die zugeführte Wassermenge derart bemessen, dass ein Großteil des Wassers verdampft und der Wassergehalt des Stoffstroms nur geringfügig ansteigt, insbesondere sollte der Feuchtigkeitsgehalt des gekühlten Stoffstroms weniger als 5%, vorzugsweise weniger als 3% betragen.

Durch die beiden übereinander angeordneten Prozessräume 10, 11 kann die Aufstellfläche der Anlage relativ gering gehalten werden. Außerdem kann bei dieser Anordnung die Schwerkraft für den Materialtransport ausgenutzt werden. Die kompakte Anlagenstruktur reduziert auch die Kosten der gesamten Anlage, da insbesondere nur ein Fundament erforderlich ist.

## Patentansprüche

1. Anlage zur thermischen Behandlung eines Stoffstroms (2), vorzugsweise eines Kohlenstoff enthaltenden Stoffstroms, umfassend einen Mehretagenofen (1) mit wenigstens einem oberen und einem unteren Prozessraum (10; 11), die gastechnisch voneinander getrennt sind und jeweils wenigstens zwei übereinander angeordnete Etagen (100-102; 110-112) umfassen, wobei der wenigstens eine obere Prozessraum (10) zur Wärmebehandlung des Stoffstroms (2) bei erhöhten Temperaturen als Torrefizierungszone und der untere Prozessraum (11) als Kühlzone ausgebildet ist,
**dadurch gekennzeichnet, dass**
- die Kühlzone Mittel (5) zur Einspeisung eines flüssigen Kühlmittels zur Kühlung und Schaffung einer inerten Atmosphäre aufweist,
- wenigstens eine Zentralwelle (106, 116) vorgesehen ist, die in jeder Etage mit Krählarmen (107, 117) zum Transport des Stoffstroms bestückt ist, und
- die Mittel (5) zur Einspeisung des flüssigen Kühlmittels an der Zentralwelle (116) und/oder an den Krählarmen (117) angeordnet sind.

2. Anlage nach Anspruch 1, **dadurch gekennzeichnet, dass** die Kühlzone (11) Mittel (40, 41) zum Zu- und Abführen eines Kühlgases aufweist.

3. Anlage nach Anspruch 1, **dadurch gekennzeichnet, dass** jede Etage (100-102; 110-112) einen Etagenboden (103-105; 113-115) aufweist und die Etagenböden der Kühlzone mittels einer Kühleinrichtung gekühlt werden.

4. Verfahren zur thermischen Behandlung eines Stoffstroms (1), vorzugsweise eines Kohlenstoff enthaltenden Stoffstroms in wenigstens einem oberen und einem unteren Prozessraum (10; 11), die gastechnisch voneinander getrennt sind und jeweils wenigstens zwei übereinander angeordnete Etagen (100-102; 110-113) umfassen, wobei der Stoffstrom (2) in dem wenigstens einen oberen Prozessraum (10) einer Wärmebehandlung unter erhöhten Temperaturen und im unteren Prozessraum (11) einer Kühlung unterzogen wird,
**dadurch gekennzeichnet, dass** die Kühlung des Stoffstroms (2) durch Einspeisung eines flüssigen Kühlmittels unter Schaffung einer inerten Atmosphäre erfolgt.

5. Verfahren nach Anspruch 4, **dadurch gekennzeichnet, dass** neben einer Wasserkühlung eine Kühlung mittels eines Kühlgases erfolgt.

6. Verfahren nach Anspruch 4, **dadurch gekennzeichnet, dass** die zur Kühlung verwendete flüssige Kühlmittelmenge, so bemessen wird, dass der Wassergehalt des abgekühlten Stoffstroms weniger als 5%, vorzugsweise weniger als 3%, bezogen auf das Gewicht des in der Kühlzone (2) abgekühlten Stoffstroms beträgt.

7. Verfahren nach Anspruch 4, **dadurch gekennzeichnet, dass** die zur Kühlung verwendete flüssige Kühlmittelmenge, so bemessen wird, dass die zugeführte Kühlmittelmenge zu wenigstens 90% verdampft.

8. Verfahren nach Anspruch 4, **dadurch gekennzeichnet, dass** die Temperatur des Stoffstroms (2) in der Kühlzone um mehr als 30% reduziert wird.

9. Verfahren nach Anspruch 4, **dadurch gekennzeichnet, dass** die Temperatur des Stoffstroms (2) in der Kühlzone auf unter 85°C reduziert wird.

10. Verfahren nach Anspruch 4, **dadurch gekennzeichnet, dass** bereits gekühltes Material und/oder an anderer Stelle dem Stoffstrom entzogene Prozessstäube in den unteren Prozessraum eingeführt und mit dem zu kühlenden Stoffstrom zur Kühlung desselben vermischt werden.

11. Verfahren nach Anspruch 4, **dadurch gekennzeichnet, dass** bei der Kühlung Wärmeenergie gewonnen wird, die zur Wärmebehandlung des Stoffstroms (2) in einem oberen Prozessraum genutzt wird.

12. Verfahren nach Anspruch 4, **dadurch gekennzeichnet, dass** in einer weiteren, mit der Kühlzone des Mehretagenofens (1) in Verbindung stehenden Kühleinrichtung (6) eine zusätzliche Kühlung mit Umgebungsluft oder einem Gas mit einem Sauerstoffgehalt von weniger als 8% erfolgt.

## Claims

1. Installation for the thermal treatment of a material stream (2), preferably a material stream containing carbon, comprising a multi-level furnace (1) having at least one upper and one lower process chamber (10; 11), which chambers are separated from one another in terms of gas flow and each comprise at least two levels (100-102; 110-112) arranged one above the other, wherein the at least one upper process chamber (10) is formed as a torrefaction zone for the thermal treatment of the material stream (2) at elevated temperatures and the lower process chamber (11) is formed as a cooling zone,
**characterized in that**
- the cooling zone comprises means (5) for feeding in a liquid coolant for cooling and creating an inert atmosphere,
- at least one central shaft (106, 116), which is equipped at each level with rabble arms (107, 117) for transporting the material stream, is provided, and
- the means (5) for feeding in the liquid coolant are arranged on the central shaft (116) and/or on the rabble arms (117).

2. Installation according to Claim 1, **characterized in that** the cooling zone (11) comprises means (40, 41) for supplying and discharging a cooling gas.

3. Installation according to Claim 1, **characterized in that** each level (100-102; 110-112) comprises a floor for the level (103-105; 113-115), and the floors for the levels of the cooling zone are cooled by means of a cooling device.

4. Method for the thermal treatment of a material stream (1), preferably a material stream containing carbon, in at least one upper and one lower process chamber (10; 11), which chambers are separated from one another in terms of gas flow and each comprise at least two levels (100-102; 110-113) arranged one above the other, wherein the material stream (2) is subjected to thermal treatment at elevated temperatures in the at least one upper process chamber (10) and is subjected to cooling in the lower process chamber (11),
**characterized in that** the cooling of the material stream (2) is carried out by feeding in a liquid coolant such that an inert atmosphere is created.

5. Method according to Claim 4, **characterized in that**, in addition to water cooling, cooling by means of a cooling gas is carried out.

6. Method according to Claim 4, **characterized in that** the liquid coolant quantity used for cooling is such that the water content of the cooled material stream is less than 5%, preferably less than 3%, with respect to the weight of the material stream cooled in the cooling zone (2).

7. Method according to Claim 4, **characterized in that** the liquid coolant quantity used for cooling is such that at least 90% of the supplied coolant quantity evaporates.

8. Method according to Claim 4, **characterized in that** the temperature of the material stream (2) is reduced by more than 30% in the cooling zone.

9. Method according to Claim 4, **characterized in that** the temperature of the material stream (2) is reduced to below 85°C in the cooling zone.

10. Method according to Claim 4, **characterized in that** material already cooled and/or process dust extracted from the material stream at another location are introduced into the lower process chamber and mixed with the material stream to be cooled for the purpose of cooling the latter.

11. Method according to Claim 4, **characterized in that** thermal energy is obtained during the cooling and is used for the thermal treatment of the material stream (2) in an upper process chamber.

12. Method according to Claim 4, **characterized in that** additional cooling by way of ambient air or a gas having an oxygen content of less than 8% is carried out in a further cooling device (6), this being connected to the cooling zone of the multi-level furnace (1).

## Revendications

1. Installation de traitement thermique d'un écoulement (2) de matière, de préférence d'un écoulement de matière contenant du carbone, l'installation comprenant un four (1) à plusieurs étages présentant au moins une chambre de traitement supérieure et une chambre de traitement inférieure (10; 11) séparées l'une de l'autre en termes d'écoulement de gaz et comprenant chacune au moins deux étages (100-102; 110-112) disposés l'un au-dessus de l'autre,
la ou les chambres supérieures de traitement (10) étant configurées pour traiter thermiquement l'écoulement de matière (2) à haute température, en tant que zone de torréfaction, la chambre inférieure de traitement (11) étant configurée comme zone de refroidissement,
**caractérisée en ce que**
la zone de refroidissement présente des moyens (5) d'injection d'un agent liquide de refroidissement en vue du refroidissement et de la formation d'une atmosphère inerte,
**en ce qu'**au moins un arbre central (106, 116) est prévu et est équipé à chaque étage de bras de raclage (107, 117) servant à transporter l'écoulement de matière et
**en ce que** les moyens (5) servant à injecter l'agent de refroidissement liquide sont disposés sur l'arbre central (116) et/ou sur les bras de raclage (117) .

2. Installation selon la revendication 1, **caractérisée en ce que** la zone de refroidissement (11) présente des moyens (40, 41) d'amenée et d'évacuation d'un gaz de refroidissement.

3. Installation selon la revendication 1, **caractérisée en ce que** chaque étage (100-102; 110-112) présente un fond (103-105; 113-115) d'étage, les fonds d'étage de la zone de refroidissement étant refroidis au moyen d'un dispositif de refroidissement.

4. Procédé de traitement thermique de traitement thermique d'un écoulement (1) de matière, de préférence d'un écoulement de matière contenant du carbone, dans au moins une chambre de traitement supérieure et une chambre de traitement inférieure (10; 11) séparées l'une de l'autre en termes d'écoulement de gaz et comprenant chacune au moins deux étages (100-102; 110-113) disposés l'un au-dessus de l'autre,
l'écoulement de matière (2) subissant dans la ou les chambres supérieures de traitement (10) un traitement thermique à haute température et dans la chambre inférieure de traitement (11) un refroidissement,
**caractérisé en ce que**
le refroidissement de l'écoulement de matière (2) s'effectue par injection d'un agent liquide de refroidissement et formation d'une atmosphère inerte.

5. Procédé selon la revendication 4, **caractérisé en ce qu'**en plus d'un refroidissement par eau a lieu un refroidissement au moyen d'un gaz de refroidissement.

6. Procédé selon la revendication 4, **caractérisé en ce que** le débit d'agent de refroidissement liquide utilisé pour le refroidissement est dimensionné de telle sorte que la teneur en eau de l'écoulement de matière refroidi soit inférieure à 5 % et de préférence inférieure à 3 % par rapport au poids de l'écoulement de matière refroidi dans la zone de refroidissement (2) .

7. Procédé selon la revendication 4, **caractérisé en ce que** le débit d'agent de refroidissement liquide utilisé pour le refroidissement est dimensionné de telle sorte que le débit d'agent de refroidissement apporté s'évapore à au moins 90 %.

8. Procédé selon la revendication 4, **caractérisé en ce que** la température de l'écoulement de matière (2) est réduite de plus de 30 % dans la zone de refroidissement.

9. Procédé selon la revendication 4, **caractérisé en ce que** la température de l'écoulement de matière (2) est réduite à moins de 85°C dans la zone de refroidissement.

10. Procédé selon la revendication 4, **caractérisé en ce que** le matériau déjà refroidi et/ou les poussières de traitement qui s'échappent en d'autres emplacements de l'écoulement de matière sont introduits dans la chambre intérieure de traitement et mélangés avec l'écoulement de matière à refroidir en vue de refroidir ce dernier.

11. Procédé selon la revendication 4, **caractérisé en ce que** lors du refroidissement, l'énergie thermique est récupérée et est utilisée pour le traitement thermique de l'écoulement de matière (2) dans une chambre de traitement supérieure.

12. Procédé selon la revendication 4, **caractérisé en ce qu'**un refroidissement supplémentaire avec l'air ambiant ou un gaz dont la teneur en oxygène est inférieure à 8 % a lieu dans un autre dispositif de refroidissement (6) qui communique avec la zone de refroidissement du four (1) à plusieurs étages.
